# EUROPEAN PATENT APPLICATION

(11) **EP 0 836 168 A1**
(43) Date of publication of application: **15.04.1998**
(21) Application number: 97917473.7
(22) Date of filing: 21.04.1997
(51) Int. Cl.: G08G 1/127, G08G 1/0969

(54) **INFORMATION TRANSMISSION SYSTEM FOR ALLOCATION OF CARS**

(30) Priority: 26.04.1996 JP 130781/96
(71) Applicant: SHIMADZU CORPORATION, Nakagyo-ku Kyoto-shi Kyoto 604 (JP)
(72) Inventor: SUGIBUCHI, Toshihiko, Shimadzu Corporation, Nakagyo-ku, Kyoto-shi, Kyoto 604 (JP); NASU, Ryutaro, Shimadzu Corporation, Nakagyo-ku, Kyoto-shi, Kyoto 604 (JP); KUWAYAMA, Yukiko, Shimadzu Corporation, Nakagyo-ku, Kyoto-shi, Kyoto 604 (JP)
(74) Representative: Kilian, Helmut, Dr.
(86) International application number: JP9701392
(87) International publication number: WO9741544

(57) **Abstract**

The system for transmitting dispatch information determines the current position of the dispatch vehicle and, when the destination of the dispatch vehicle is input at the dispatcher, determines the route information from the current position to the destination of the dispatch vehicle as image data based on stored map information. The system transmits the dispatch information, which includes at least said determined route information, to the dispatch vehicle from the dispatcher via wireless communications, and displays the transmitted dispatch information as an image in the dispatch vehicle.

## Description

### Technical Field

The present invention relates to a system for transmitting dispatch information, such as destination and route, to the drivers of vehicles of, for example, commodities distributors such as home delivery services, transporting departments of distributors who transport products to convenience stores and the like, purchasing and transporting departments of distributors who purchase fishery products and the like, and personnel transportation such as taxis.

### Background Art

Before now, information for drivers of vehicles dispatched to transport commodities, personnel or the like has been transmitted by voice via wireless communication. For example, when customer's requests come to a control center for dispatching taxis or the like, instructions such as "go to XX of OO town" is transmitted by voice via wireless communication. Also, some vehicles have been equipped with a terminal for facsimile communication to transmit the destination in the form of a document.

Also, with the use of car navigation systems in recent years, the location of such vehicles and their destination have been able to be confirmed from map information stored in a CD-ROM or the like.

When the destination is transmitted by voice or document, the driver of the vehicle has to determine the route to the destination based on the position of the destination relative to the location of his own vehicle. Therefore, the inconvenience is that the driver loses his way or the dispatch is delayed, when the destination is not transmitted correctly or the position of the destination relative to one's own vehicle can not be correctly understood.

A great investment is necessary to install car navigation systems, which comprise a search device for searching map information stored in a CD-ROM or the like, in all dispatch vehicles. Also, even when such a search device for map information is installed, it cannot confirm ever-changing situations, such as traffic jams and road works. Furthermore, when updating map information, it is necessary to update the CD-ROM memory of the car navigation systems in all the vehicles; this requires time and labor.

The object of the present invention is to provide a system for transmitting dispatch information free from the above-described problems.

### Disclosure of Invention

The system for transmitting dispatch information of the present invention is characterized in that it is a system to transmit dispatch information from a dispatcher to dispatch vehicles and comprises the following: means for determining the current position of the dispatch vehicle; means for inputting the destination of the dispatch vehicle at the dispatcher; means for storing map information at the dispatcher; means for determining route information from the current position to the destination of the dispatch vehicle, as image data based on said stored map information at the dispatcher; means for wireless communication to transmit the dispatch information, which includes at least said route information determined as image data, to the dispatch vehicle from the dispatcher; and means for displaying said transmitted dispatch information as an image in the dispatch vehicle.

With the constitution of the present invention, the driver can confirm the dispatch information, which includes route information, as an image concurrent to the transmission of the information. The driver can correctly reach the destination without losing his or her way because the driver is not required to determine the route to the destination.

Also, the means for determining the route information based on the map information does not need to be installed in individual dispatch vehicles and need only be installed at the dispatcher. Accordingly, a major investment is not necessary to construct the system of the present invention. Furthermore, the map information can be updated without time and labor.

In the system for transmitting dispatch information of the present invention, it is preferable that the system comprises means for inputting additional information, which affects the route from the current position to the destination of the dispatch vehicle, at the dispatcher, wherein it is possible to determine said route information as image data based on the additional information and said map information.

Accordingly, the system can determine the route information based on this additional information, such as traffic jam conditions which changes every moment. Therefore, the dispatch vehicle can reach the destination more quickly and reliably. As a result, transporting becomes smooth and thus highly efficient, especially when the system is used for commodities transporting.

In the system for transmitting dispatch information of the present invention, it is preferable that the transmitted dispatch information is displayed by a head up display in the dispatch vehicle. This enables the driver to confirm the dispatch information while the driver watches the actual scene in front of the driver.

The present invention can provide a system for transmitting dispatch information for smooth and quick dispatching; this system can be constructed without requiring a great investment and can be easily updated as well.

### BRIEF DESCRIPTION OF DRAWINGS

Figure 1 is a diagram to show the external constitution in the dispatch vehicle of the system for transmitting dispatch information of the embodiment of the present invention;
Figure 2 is a diagram to show the external constitution at the dispatcher of the system for transmitting dispatch information of the embodiment of the present invention;
Figure 3 is a block diagram to explain the constitution in the dispatch vehicle of the system for transmitting dispatch information of the embodiment of the present invention;
Figure 4 is a block diagram to explain the constitution at the dispatcher of the system for transmitting dispatch information of the embodiment of the present invention; and
Figure 5 is a diagram to show an example of the display of dispatch information by the system for transmitting dispatch information of the embodiment of the present invention.

### Best Mode for Carrying Out the Invention

The embodiment of the present invention is explained below with reference to the figures.

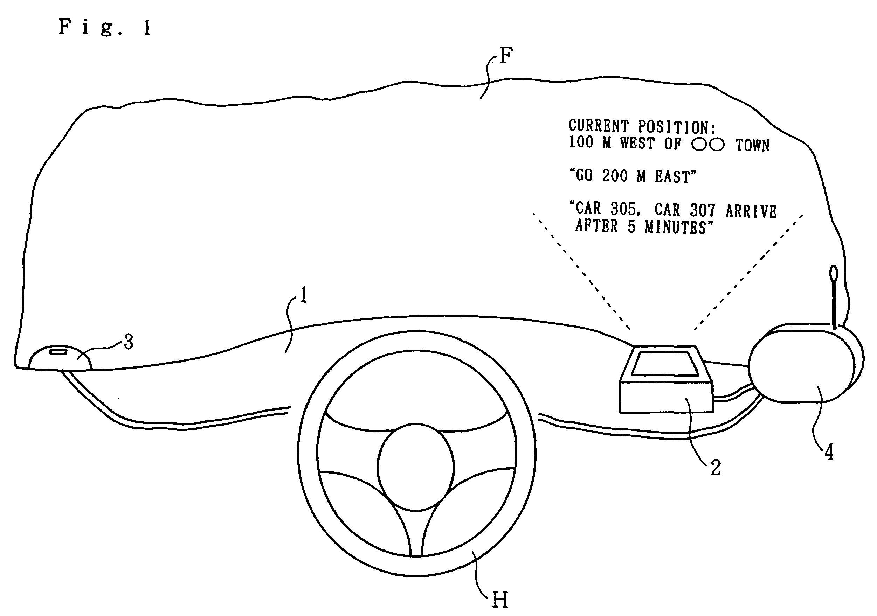

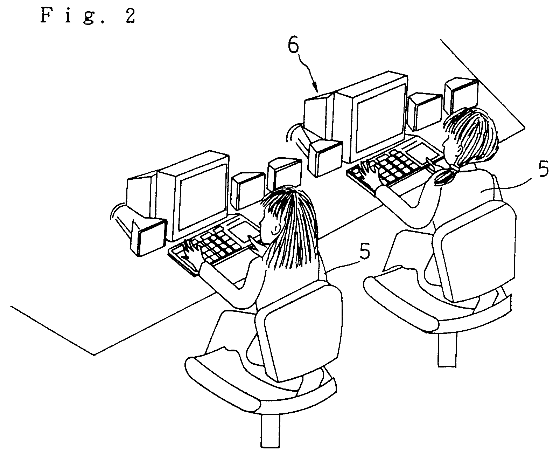

Figure 1 shows the interior of a dispatch vehicle. A display device 2, GPS (Global Positioning System) sensor 3, and a controller 4 including a wireless communication device are installed on the dashboard 1 in front of the vehicle's steering wheel H. The controller 4 is connected to the display device 2 and the GPS sensor 3. Figure 2 shows the interior of the dispatch room which transmits the dispatch information, a controller 6 including a wireless communication device and operated by an operator 5 is installed therein.

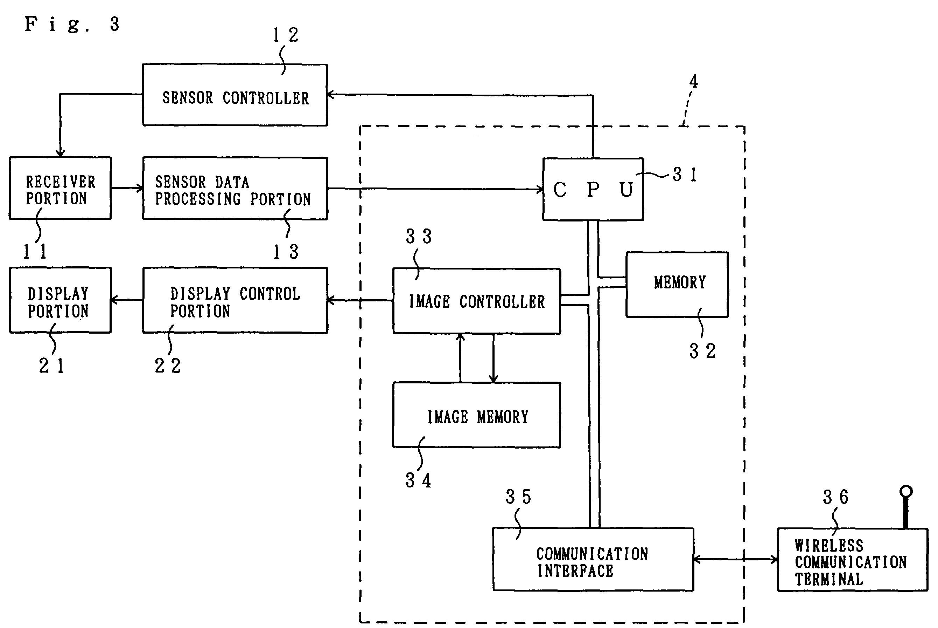

As shown in Figure 3, the GPS sensor 3 comprises a receiver portion 11 to receive a signal from an artificial satellite constituting the GPS, a sensor controller 12 which starts the receiver portion 11 by a start signal sent from the controller 4, and a sensor data processing portion 13 which functions as an interface between the receiver portion 11 and the controller 4.

The display device 2 in the vehicle is comprised of a head up display. The head up display comprises a display portion 21 and a display control portion 22 which drives the display portion 21 according to the image signal sent from the controller 6. The display portion 21 comprises an image display light emitter such as a liquid crystal display with a backlight, and a combiner which transmits light from in front of the vehicle while reflecting the image display light to the driver's eyes. Therefore, the driver can see both the scene in front of the vehicle and the virtual image corresponding to the dispatch information, which is formed in front of the driver. The combiner can be constituted by, for example, a dedicated coating on the windshield F of the vehicle as shown in Figure 1.

The controller 4 in the vehicle comprises CPU 31, memory 32 to store a program to drive the CPU 31, image controller 33, image memory 34, and communication interface 35. The image control portion 22 is connected to the image controller 33. A wireless communication terminal 36 is connected to the communication interface 35.

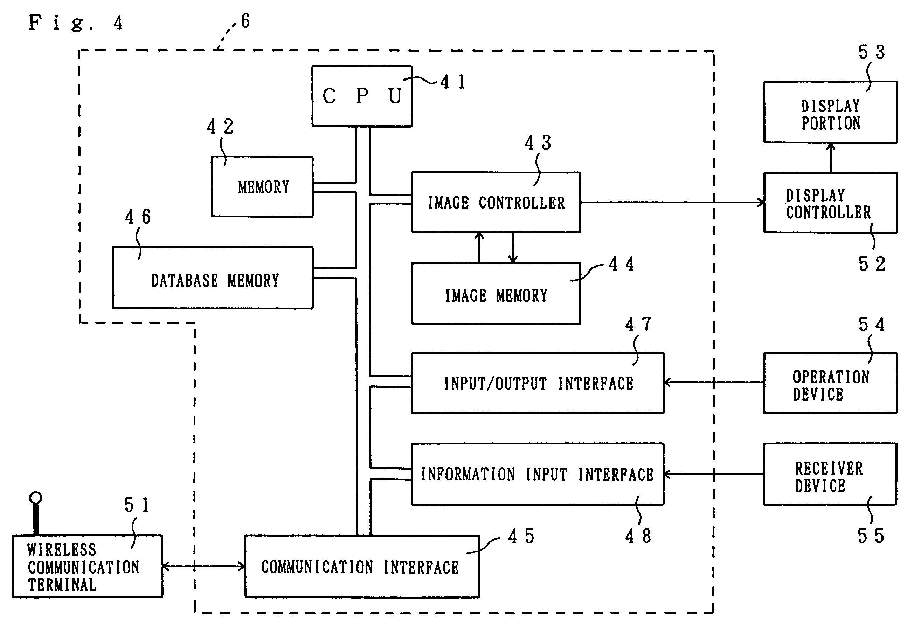

As shown in Figure 4, the dispatcher controller 6 comprises CPU 41, memory 42 to store a program for driving the CPU 41, image controller 43, image memory 44, communication interface 45, database memory 46 for map information, input/output interface 47, and information input interface 48.

The map information constituting the database comprises, for example, placement of street, placement of points for street selection such as intersections and junctions, placement of buildings, distances between the points for street selection, traffic control information such as placement of one-way streets, and the like, which correspond to longitude and latitude. Image data, which is generally used when presenting route information, is previously input and written in the image memory 44 by the image controller 43. The image data, which is generally used when presenting route information, are constituted of map images and text images such as "INTERSECTION," "GO STRAIGHT," "TURN LEFT," "TURN RIGHT," and the like.

A wireless communication terminal 51 is connected to the communication interface 45 of the dispatcher controller 6. A display controller 52 is connected to the image controller 43. A display portion 53 is connected to the display controller 52. The display portion 53 can be comprised of a liquid crystal display, cathode ray tube display or the like, which is viewed by the operator 5. A operation device 54 is connected to the input/output interface 47. This operation device 54 can be comprised of a touch panel placed over the screen of the display portion 53, a keyboard operated by the operator 5 or the like. A receiver device 55 is connected to the information input interface 48. The receiver device 55 receives additional information sent from an external information transmission source. The additional information is information, which affects the route from the current position to the destination of the dispatch vehicle, such as traffic jam information and the like.

In order to transmit dispatch information to the dispatch vehicle in this constitution, the operator 5 inputs the dispatch vehicle and the destination of the dispatch vehicle into the dispatcher controller 6 by the operation device 54. The dispatch vehicle is input by, for example, inputting an identification code, which is previously allotted to the dispatch vehicle. The destination can be input by inputting the longitude and latitude of the destination. Or, when the destination is known, the destination can be input by inputting an identification code corresponding to the destination. Also, the operator can input the destination by pressing the location corresponding to the destination on the map image displayed on the display portion 53 via the touch panel, which is placed over the display portion 53.

Next, the dispatcher controller 6 determines the current position of the dispatch vehicle. Specifically, the signal from the artificial satellite received by the GPS sensor 3 is input to the vehicle controller 4 by means of the sensor data processing portion 13, and then it is transmitted to the dispatcher controller 6 by wireless communication. The dispatcher controller 6 determines the current position of the dispatch vehicle based on the transmitted signal.

Next, the dispatcher controller 6 determines the route information from the current position to the destination of the dispatch vehicle by searching the database of map information. This search can be achieved by, for example, eliminating the routes, which go against one way streets, and routes, which are impassable because of road works, from the shortest routes, which are attained by combining the points for street selection between the current position and the destination. Furthermore, the display portion 53 displays traffic jam information and the like input from the receiver device 55. Based on the information input from the receiver device 55, gridlocked areas and the like are input from the operation device 54 as routes to be eliminated. Therefore, routes including gridlocked areas can be eliminated from the routes to be searched. The route information can be comprised of units of information which are serially linked, each of the units of information corresponding to information between the points for street selection. Each unit of information can be comprised of an image of a map, which shows the next point for street selection, and text images, which show the travel direction, travel distance, names of buildings to serve as markers for points for street selection, area names, and the travel direction and distance to the points for street selection, and the like.

Next, the dispatch controller 6 reads the image data from the image memory 44 based on the determined route information by the image controller 43, and then synthesizes image data for route guidance into the dispatch information.

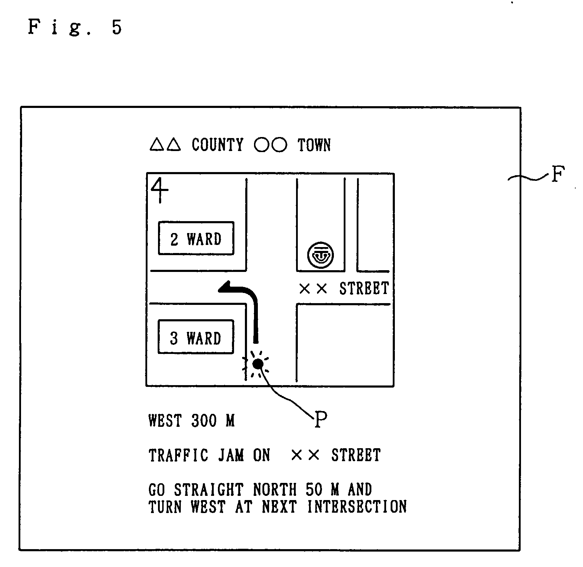

Next, the dispatch controller 6 transmits the synthesized image data to the vehicle controller 4 via wireless communication. The vehicle controller 4 writes the transmitted image data in the image memory 34 by the image controller 33. Next, the written image data is read out by the image controller 33 and then output to the display device 2. The display device 2 generates an image corresponding to the output image data as a virtual image in front of the driver. Figure 5 shows an example of such a generated image, that is, the current location at which the dispatch vehicle is driving is displayed as a flashing red light P, and the map image of the surroundings of the current location and also text image to give instructions for the route to the destination including traffic information are displayed.

With this constitution, the driver can confirm the dispatch information, which includes route information, as an image concurrent to the transmission of the information. The driver can correctly reach the destination without getting losing his or her way because the driver is not required to determine the route to the destination. Also the means for determining the route information based on the map information need not be installed in individual dispatch vehicles and need only be installed at the dispatcher. Therefore constructing the system does not require a great investment. Furthermore, the map information can be updated without time and labor. Moreover, this system can determine the route information based on the additional information, such as traffic jam information which is changing all the time, as well as map information. Therefore, the dispatch vehicle can reach the destination more quickly and reliably. As a result, transporting becomes smooth and thus highly efficient, especially when this system is used for commodities transporting. Furthermore, in this constitution, the driver can confirm the dispatch information while the driver watches the actual scene in front of the driver because the dispatch information is displayed by a head up display.

The present invention is not limited to the embodiment noted above. For example, the wireless communication terminal between the dispatch controller 6 and the vehicle controller 4 can be a terminal of a public wireless communication system, such as a PHS (Personal Handyphone System). Also, the display of the dispatch information in the dispatch vehicle can be a stand-alone type comprised of the means for emitting image display light having a dedicated combiner separated from the windshield. This display can be monochrome type or color type. The system can transmit audio information by a speaker system in combination with the image information. The dispatcher controller can be controlled by a host computer or the like instead of an operator to transmit dispatch information to the dispatch vehicle controller. Also, the dispatch information can include arbitrary information other than route guidance information. Such arbitrary information can include customer information, such as the name of a representative of a company which is a major client in the case of dispatching a taxi, or information about cargo to be delivered in the case of dispatching a distribution vehicle. Also, theft of information can be prevented by, for example, scrambling the information when dispatch information is sent from a dispatcher controller to a vehicle controller.

## Claims

1. A system for transmitting dispatch information characterized in that it is a system to transmit dispatch information from a dispatcher to dispatch vehicles, comprising:
means for determining the current position of the dispatch vehicle;
means for inputting the destination of the dispatch vehicle at the dispatcher;
means for storing map information at the dispatcher;
means for determining route information from the current position to the destination of the dispatch vehicle, as image data based on said stored map information at the dispatcher;
means for wireless communication to transmit the dispatch information, which includes at least said route information determined as image data, to the dispatch vehicle from the dispatcher; and
means for displaying said transmitted dispatch information as an image in the dispatch vehicle.

2. The system for transmitting dispatch information according to claim 1, comprising:
means for inputting additional information, which affects the route from the current position to the destination of the dispatch vehicle, at the dispatcher;
wherein it is possible to determine said route information as image data based on the additional information and said map information.

3. The system for transmitting dispatch information according to claim 1 or 2, wherein said transmitted dispatch information is displayed by a head up display in the dispatch vehicle.
